# EUROPEAN PATENT APPLICATION

(11) **EP 2 375 609 A1**
(43) Date of publication of application: **12.10.2011**
(21) Application number: 09833501.1
(22) Date of filing: 18.12.2009
(51) Int. Cl.: H04L 1/18, H04B 1/707, H04W 28/04

(54) **WIRELESS COMMUNICATION DEVICE AND WIRELESS COMMUNICATION METHOD**

(30) Priority: 19.12.2008 JP 2008323794
(71) Applicant: NTT DOCOMO, INC., Chiyoda-ku Tokyo 100-6150 (JP)
(72) Inventor: TAKAGI, Yukiko, Tokyo 100-6150 (JP); HAYASHI, Takahiro, Tokyo 100-6150 (JP); HANAKI, Akihito, Tokyo 100-6150 (JP); GOTO, Yoshikazu, Tokyo 100-6150 (JP)
(74) Representative: HOFFMANN EITLE
(86) International application number: PCT/JP2009/071131
(87) International publication number: WO 2010/071199

(57) **Abstract**

A radio base station (100) executes a hybrid automatic repeat request including an automatic repeat request to request a source of a signal sequence (B1) transmitted via E-DPDCH to retransmit the signal sequence (B1) and combining process of the signal sequence (B1) received a plurality of times as a consequence of the retransmission. The radio base station (100) includes: a E-DPDCH despreading unit (113) configured to execute despreading process of the signal sequence (B1) received via the E-DPDCH; a HARQ buffer (121) configured to store the signal sequence (B1) outputted from the E-DPDCH despreading unit (113); and a HARQ control unit (123) configured to execute the combining process by using the signal sequence (B1) stored in the HARQ buffer (121).

## Description

### TECHNICAL FIELD

The present invention relates to a radio communication apparatus and a radio communication method for executing a hybrid automatic repeat request which includes an automatic repeat request and processing of combining signal sequences received multiple times by retransmission.

### BACKGROUND ART

In the Enhanced Uplink (EUL) which is a high-speed uplink packet communication technique standardized by the Third Generation Partnership Project (3GPP), a hybrid automatic repeat request (HARQ) is used for communications between a radio base station (Node B) and a mobile terminal (UE) (Patent Document 1, for example).

The HARQ is designed to reduce the number of times of retransmission of a signal sequence (a packet) by combining an automatic repeat request (ARQ) with error correction. Moreover, according to the HARQ, a received signal sequence is not discarded even if the signal sequence contains an error. The signal sequence is combined with a retransmitted signal sequence.

In the Node B (a radio communication apparatus) configured to execute processing in accordance with the EUL, a signal sequence received via a physical data channel, namely, an enhanced dedicated physical data channel (E-DPDCH) and deinterleaved is further subjected to derate matching. In derate matching, through operations such as repetition and puncturing of the signal sequence, the signal sequence is processed to have the same number of bits as the signal sequence before encoding. The signal sequence after the derate matching is stored in a HARQ buffer.

### PRIOR ART DOCUMENT

### PATENT DOCUMENT

Patent Document 1: Japanese Patent Application Publication No. 2007-166642 (pp.3-4)

### SUMMARY OF THE INVENTION

However, the above-described conventional HARQ has the following problem. Specifically, the derate matching requires an E-DCH transport format combination indicator (E-TFCI) indicating a transmission format of the E-DPDCH as well as a retransmission sequence number (RSN) indicating the order of retransmission of data in accordance with the ARQ.

For this reason, when an error occurs in the decoding of the E-TFCI or the RSN transmitted via the physical control channel, namely, the enhanced dedicated physical data channel (E-DPDCH), there occurs a problem that the signal sequence received via the E-DPDCH cannot be properly decoded and the signal sequences received multiple times cannot be properly combined in the processing in accordance with the HARQ. In other words, there is still room for improvement in enhancing transmission efficiency by the HARQ.

Accordingly, it is an objective of the present invention to provide a radio communication apparatus and a radio communication method which are capable of further enhancing transmission efficiency by the HARQ, in the case of receiving a signal sequence via a physical data channel.

To solve the above problem, the present invention has following feature. A first feature of the present invention is summarized as a radio communication apparatus (radio base station 100) configured to execute a hybrid automatic repeat request including an automatic repeat request to request a source (mobile terminal 200) of a signal sequence (signal sequence B1) transmitted via a physical data channel (E-DPDCH) to retransmit the signal sequence and combining process of the signal sequence received a plurality of times as a consequence of the retransmission, the radio communication apparatus comprising: a despreading unit (E-DPDCH despreading unit 113) configured to execute despreading process of the signal sequence received via the physical data channel; a HARQ buffer (HARQ buffer 121) configured to store the signal sequence outputted from the despreading unit; and a HARQ control unit (HARQ control unit 123) configured to execute the combining process by using the signal sequence stored in the HARQ buffer.

According to above described radio communication apparatus, the signal sequence outputted from the despreading unit is stored in the HARQ buffer, not after the derate matching process. Therefore, control signals such as an E-TFCI and an RSN are not required in the combining process of the signal sequence in the HARQ buffer.

That is, according to above described radio communication apparatus, the combining process is properly executed even if the control signals such as the E-TFCI and the RSN has an error, and the transmission efficiency by the HARQ can be improved.

A second feature of the present invention according to the first feature of the present invention is summarized as the despreading unit includes: a control channel despreading unit (E-DPCCH despreading unit 109) configured to execute despreading process of a signal sequence received via a physical control channel (E-DPCCH); and a data channel despreading unit (E-DPDCH despreading unit 113) connected to an output side of the control channel despreading unit and configured to execute the despreading process of the signal sequence received via the physical data channel by using part of the signal sequence received via the physical control channel after the despreading process of the signal sequence received via the physical control channel, and the HARQ buffer stores the signal sequence which is yet to be inputted to the data channel despreading unit.

A third feature of the present invention is summarized as a radio communication apparatus (radio base station 100) configured to execute a hybrid automatic repeat request including an automatic repeat request to request a source (mobile terminal 200) of a signal sequence (signal sequence B1) transmitted via a physical data channel (E-DPDCH) to retransmit the signal sequence and combining process of the signal sequence received a plurality of times as a consequence of the retransmission, the radio communication apparatus comprising: a deinterleaving process unit (deinterleaver 115) configured to execute deinterleaving process of the signal sequence received via the physical data channel; a HARQ buffer (HARQ buffer 121) configured to store the signal sequence outputted from the deinterleaving process unit; and a HARQ control unit (HARQ control unit 123) configured to execute the combining process by using the signal sequence stored in the HARQ buffer.

According to above described radio communication apparatus, the signal sequence outputted from the deinterleaving process unit is stored in the HARQ buffer, not after the derate matching process. Therefore, control signals such as an E-TFCI and an RSN are not required in the combining process of the signal sequence in the HARQ buffer.

That is, according to above described radio communication apparatus, the combining process is properly executed even if the control signals such as the E-TFCI and the RSN has an error, and the transmission efficiency by the HARQ can be improved.

A fourth feature of the present invention according to the third feature of the present invention is summarized as the radio communication apparatus, further comprising: a derate matching unit (derate matching unit 117) connected to an output side of the deinterleaving process unit and configured to execute derate matching of the deinterleaved signal sequence after the deinterleaving process, the derate matching making the signal sequence have the same number of bits as the signal sequence before encoding by performing at least any of repetition and puncturing on the signal sequence, wherein the HARQ buffer stores the signal sequence which is outputted from the deinterleaving process unit and is yet to be inputted to the derate matching unit.

A fifth feature of the present invention according to the third feature of the present invention is summarized as the radio communication apparatus, further comprising: a despreading unit (E-DPDCH despreading unit 113) configured to execute despreading process of the signal sequence received via the physical data channel, wherein the despreading unit executes the despreading process before the deinterleaving process, and the HARQ control unit executes the combining process of the signal sequence which is stored in the HARQ buffer, and which is outputted from the deinterleaving process unit and is yet to be inputted to the derate matching unit.

A sixth feature of the present invention is summarized as a radio communication apparatus (radio base station 100) configured to execute a hybrid automatic repeat request including an automatic repeat request to request a source (mobile terminal 200) of a signal sequence (signal sequence B1) transmitted via a physical data channel (E-DPDCH) to retransmit the signal sequence and combining process of the signal sequence received a plurality of times as a consequence of the retransmission, the radio communication apparatus comprising: a derate matching unit (derate matching unit 117) configured to execute derate matching on the signal sequence after deinterleaving process, the derate matching making the signal sequence have the same number of bits as the signal sequence before encoding by performing least any of repetition and puncturing on the signal sequence; a HARQ buffer (HARQ buffer 121) configured to store the signal sequence outputted from the derate matching unit, and control information (signal sequence B2) including a transmission format (E-TFCI) of the physical data channel; and a HARQ control unit (HARQ control unit) configured to execute the combining process by using the signal sequence stored in the HARQ buffer, wherein when a first transmission format (E-TFCI) being a transmission format of the signal sequence at a predetermined time interval (TTI) is different from a second transmission format being a transmission format of the signal sequence at a time interval earlier than the predetermined time interval, the HARQ control unit executes rate matching of the signal sequence stored in the HARQ buffer by using the second transmission format, the rate matching making the signal sequence stored in the HARQ buffer have the same number of bits as the signal sequence after encoding, the HARQ control unit executes the combining process of the signal sequence after the derate matching executed at the predetermined time interval, and the signal sequence after the rate matching, which is used as the signal sequence after the derate matching executed at the time interval earlier than the predetermined time interval, and the HARQ control unit executes the rate matching by using the first transmission format.

According to above described radio communication apparatus, when the first transmission format being the transmission format of the signal sequence at the predetermined time interval is different from the second transmission format being the transmission format of the signal sequence at the time interval earlier than the predetermined time interval, the rate matching of the signal sequence stored in the HARQ buffer is executed by using the second transmission format. Thereby, since the rate matching of the signal sequence is executed for the signal sequence stored in the HARQ buffer by using the second transmission format received prior to the first transmission format, the combining process (Soft Combining) of the retransmitted signal sequence and the signal sequence stored in the HARQ buffer can be executed.

That is, according to above described radio communication apparatus, the combining process is properly executed even if the control signals such as the E-TFCI and the RSN has an error, and the transmission efficiency by the HARQ can be improved.

A seventh feature of the present invention according to the sixth feature of the present invention is summarized as the radio communication apparatus, further comprising: a channel decoding unit (channel decoding unit 119) connected to the derate matching unit and configured to decode the derate-matched signal sequence after the deinterleaving process, wherein the HARQ buffer stores the signal sequence which is outputted from the derate matching unit and is yet to be inputted to the channel decoding unit.

An eighth feature of the present invention is summarized as a radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of: executing despreading process of the signal sequence received via the physical data channel; storing in a HARQ buffer the signal sequence outputted from the despreading unit; and executing the combining process by using the signal sequence stored in the HARQ buffer.

A ninth feature of the present invention is summarized as a radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of: executing deinterleaving process of the signal sequence received via the physical data channel; storing in a HARQ buffer the signal sequence outputted by the deinterleaving process; and executing the combining process by using the signal sequence stored in the HARQ buffer.

A tenth feature of the present invention is summarized as a radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of: executing derate matching of the signal sequence after deinterleaving process, the derate matching making the signal sequence have the same number of bits as the signal sequence before encoding by performing at least any of repetition and puncturing on the signal sequence; storing in a HARQ buffer the signal sequence outputted from the derate matching and control information including a transmission format of the physical data channel; and executing the combining process by using the signal sequence stored in the HARQ buffer, wherein in the step of executing the combining process, when a first transmission format being a transmission format of the signal sequence at a predetermined time interval is different from a second transmission format being a transmission format of the signal sequence at a time interval earlier than the predetermined time interval, rate matching of the signal sequence stored in the HARQ buffer is executed to make the signal sequence have the same number of bits as the signal sequence after encoding by using the second transmission format, the combining process is executed to combine the signal sequence after the derate matching executed at the predetermined time interval and the signal sequence after the rate matching, which is used as the signal sequence after the derate matching executed at the time interval earlier than the predetermined time interval, and the rate matching is executed by using the first transmission format.

According to the present invention, provided are a radio communication apparatus and a radio communication method which are capable of further enhancing transmission efficiency by the HARQ, in the case of receiving a signal sequence via a physical data channel.

### BRIEF DESCRIPTION OF THE DRAWINGS

[Fig. 1] Fig. 1 is an overall schematic configuration diagram of a mobile telecommunication system 1 according to an embodiment of the present invention.
[Fig. 2] Fig. 2 is a functional block configuration diagram of a radio base station 100 constituting a radio communication apparatus according to the embodiment of the present invention.
[Fig. 3] Fig. 3 is a view showing a flow of a receiving operation by the radio base station 100 according to a first embodiment of the present invention.
[Fig. 4] Fig. 4 is a view showing a flow of a receiving operation by the radio base station 100 according to a second embodiment of the present invention.
[Fig. 5] Fig. 5 is a view showing a flow of a receiving operation by the radio base station 100 according to a third embodiment of the present invention.
[Fig. 6] Fig. 6 is a view showing a configuration of a signal sequence B2 (E-DPCCH) according to the embodiment of the present invention.
[Fig. 7] Fig. 7 is an operation explanatory diagram of a HARQ buffer 121 according to the third embodiment of the present invention.

### EMBODIMENTS FOR CARRYING OUT THE INVENTION

Next, embodiments of the present invention will be described. More specifically, first to third embodiments and other embodiments will be described.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### [First Embodiment]

The first embodiment will describe (1) an overall schematic configuration of a system including a radio communication apparatus, (2) a functional block configuration of the radio communication apparatus, (3) operations of the radio communication apparatus, and (4) advantageous effect.

### (1) Overall Schematic Configuration of System Including Radio Communication Device

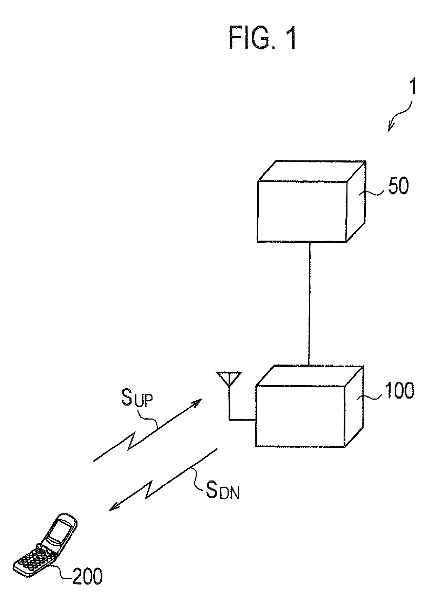

Fig. 1 is an overall schematic configuration diagram of a mobile telecommunication system 1 according to the embodiment. The mobile telecommunication system 1 complies with specifications produced by the Third Generation Partnership Project (3GPP), namely, the Enhanced Uplink (EUL).

The mobile telecommunication system 1 includes a radio network controller 50, a radio base station 100, and a mobile terminal 200. Note that the numbers of the radio base stations and the mobile terminals included in the mobile telecommunication system 1 are not limited to the numbers shown in Fig. 1.

The radio network controller 50 (RNC) executes control for radio communication between the radio base station 100 (Node B) and the mobile terminal 200 (UE).

The radio base station 100 executes radio communication with the mobile terminal 200 in accordance with the code division multiple access (CDMA) method or the like. Specifically, the radio base station 100 transmits a downlink radio signal SDN to the mobile terminal 200. On the other hand, the mobile terminal 200 transmits an uplink radio signal SUP to the radio base station 100.

Multiple physical channels used in an uplink direction are multiplexed into the uplink radio signal SUP. Specifically, a physical control channel (E-DPCCH) and a physical data channel (E-DPDCH) in the uplink direction are multiplexed.

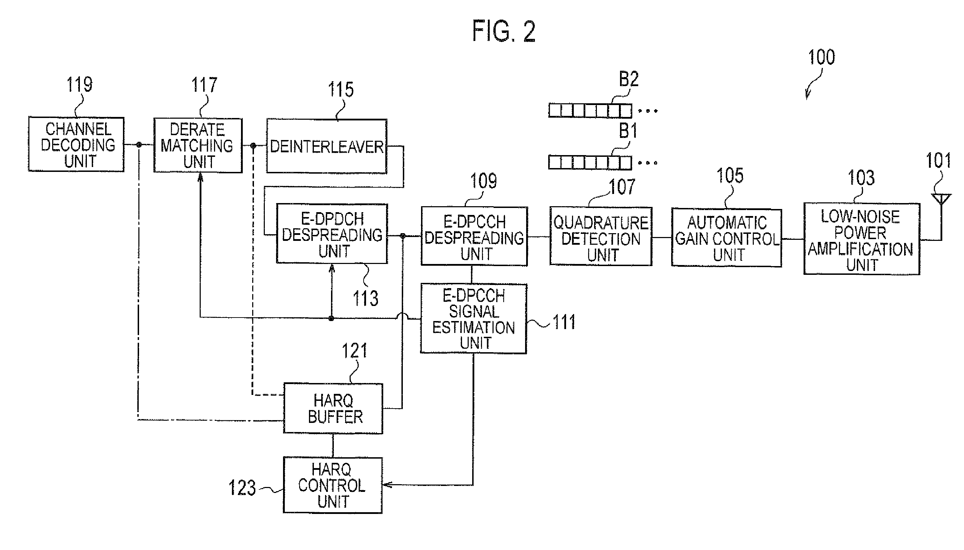

A hybrid automatic repeat request (HARQ) is used in the radio base station 100 and the mobile terminal 200. The HARQ includes an automatic repeat request (ARQ) to request a source (the mobile terminal 200) of a signal sequence B1 (not shown in Fig. 1, see Fig. 2) transmitted via the E-DPDCH to retransmit the signal sequence B1 (a packet to be more precise), and combining process of the signal sequence B1 received multiple times as a consequence of the retransmission.

### (2) Functional Block Configuration of Radio Communication Device

Fig. 2 is a functional block configuration diagram of the radio base station 100 which constitutes the radio communication apparatus in the embodiment. As shown in Fig. 2, the radio base station 100 includes an antenna 101, a low-noise amplification unit 103, an automatic gain control unit 105, a quadrature detection unit 107, an E-DPCCH despreading unit 109, an E-DPCCH signal estimation unit 111, an E-DPDCH despreading unit 113, a deinterleaver 115, a derate matching unit 117, a channel decoding unit 119, a HARQ buffer 121, and a HARQ control unit 123.

The antenna 101, the low-noise amplification unit 103, the automatic gain control unit 105, and the quadrature detection unit 107 offer prescribed functions in accordance with the EUL standards. The functions offered by the low-noise amplification unit 103, the automatic gain control unit 105, and the quadrature detection unit 107 are similar to those in a conventional radio base station and are therefore omitted.

The E-DPCCH despreading unit 109 executes despreading process of a signal sequence received via the E-DPCCH, namely, the uplink radio signal SUP containing a signal sequence B2 (control information). The E-DPCCH despreading unit 109 performs despreading by synchronizing a spread code of the received uplink radio signal SUP with a replica of a spread code retained by the radio base station 100. The E-DPCCH despreading unit 109 despreads and thereby separates the uplink radio signal SUP into multiple paths having different propagation delay time values.

The E-DPCCH signal estimation unit 111 executes channel estimation by using a pilot symbol for each of the paths separated by the E-DPCCH despreading unit 109.

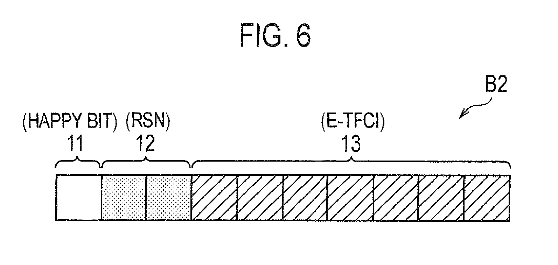

Meanwhile, the E-DPCCH signal estimation unit 111 decodes the signal sequence received via the E-DPCCH and acquires contents of the signal sequence B2. Fig. 6 shows a configuration of the signal sequence B2 (E-DPCCH). As shown in Fig. 6, the signal sequence B2 includes a happy bit 11, a RSN 12, and an E-TFCI 13.

The E-DPCCH signal estimation unit 111 notifies the E-DPDCH despreading unit 113 of a spreading factor (SF) of the spreading code based on contents of the E-TFCI 13. Meanwhile, the E-DPCCH signal estimation unit 111 notifies the derate matching unit 117 of the RSN 12 indicating the order of retransmission of data in accordance with the ARQ and the E-TFCI 13 indicating a transmission format of the E-DPDCH.

The E-DPDCH despreading unit 113 executes despreading process of the signal sequence B1 received via the E-DPDCH, namely, the uplink radio signal SUP containing user data and the like. The E-DPDCH despreading unit 113 is connected to an output side of the E-DPCCH despreading unit 109, i.e., to an output after the despreading process of the signal sequence received via the E-DPCCH. After the despreading process of the signal sequence B2 received via the E-DPCCH, the E-DPDCH despreading unit 113 executes the despreading process of the signal sequence B1 stored in the HARQ buffer 121 by using part of the signal sequence B2 (the spread ratio to be more precise) received via the E-DPCCH.

In the embodiment, the E-DPCCH despreading unit 109 constitutes a control channel despreading unit and the E-DPDCH despreading unit 113 constitutes a data channel despreading unit. Meanwhile, in the embodiment, the E-DPCCH despreading unit 109 and the E-DPDCH despreading unit 113 collectively constitute a despreading unit. The E-DPCCH despreading unit 109 and the E-DPDCH despreading unit 113 execute the despreading process prior to deinterleaving process by the deinterleaver 115.

The deinterleaver 115 executes deinterleaving process of the signal sequences (the signal sequence B1 and the signal sequence B2) received via the E-DPCCH and the E-DPDCH. In the embodiment, the deinterleaver 115 constitutes a deinterleaving process unit.

The derate matching unit 117 executes derate matching of the signal sequences deinterleaved by the deinterleaver 115 to make the signal sequences have the same number of bits as the signal sequences before encoding by performing repetition and puncturing of the signal sequences. Specifically, the derate matching unit 117 is connected to an output side of the deinterleaver 115 and is configured to execute derate matching of the deinterleaved signal sequences after the deinterleaving process.

The channel decoding unit 119 executes channel decoding of the signal sequences outputted from the derate matching unit 117, thereby reproducing the signals.

The HARQ buffer 121 stores a signal sequence transmitted from the source (the mobile terminal 200). The stored signal sequence is used for processing in accordance with the HARQ. In the embodiment, the HARQ buffer 121 stores the signal sequence B1 (the packet containing the user data and the like), which is outputted from the E-DPCCH despreading unit 109 and is yet to be inputted to the E-DPDCH despreading unit 113. The HARQ buffer 121 outputs a signal formed by combining (soft combining) the signal sequences received multiple times including the retransmission based on control by the HARQ control unit 123.

The HARQ control unit 123 executes processing in accordance with the HARQ. Specifically, the HARQ control unit 123 executes a judgment of an error in the received signal sequence B1 based on a CRC, and correction of the error. The HARQ control unit 123 stores the received signal sequence B1 in the HARQ buffer 121 without discarding even if the signal sequence includes an error, and requests the source to retransmit the signal sequence B1 including the error.

The HARQ control unit 123 executes combining process of the retransmitted signal sequence B1 and the signal sequence B1 stored in the HARQ buffer 121. The HARQ control unit 123 executes the judgment of an error based on the CRC again by using the combined signal sequence B1.

### (3) Operations of Radio Communication Device

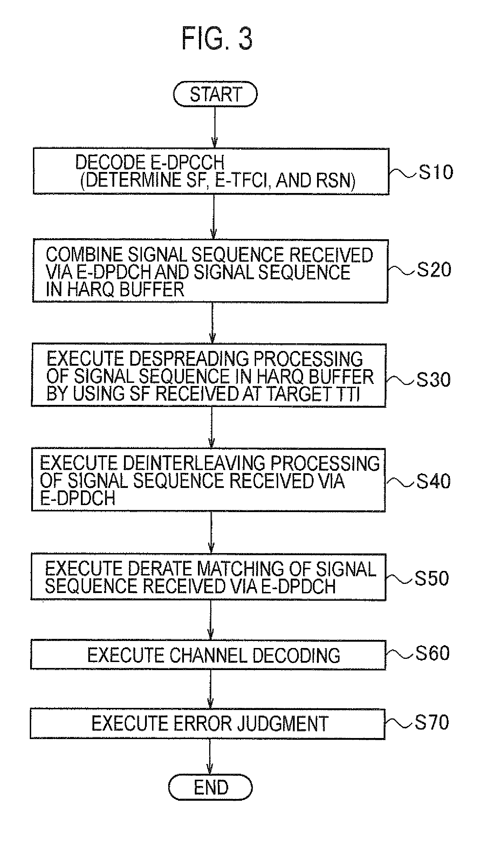

Next, operations of the radio base station 100 (the radio communication apparatus) will be described. Fig. 3 shows a flow of a receiving operation by the radio base station 100 according to the embodiment.

As shown in Fig. 3, in step S10, the radio base station 100 decodes the signal sequence received via the E-DPCCH and determines the contents of the signal sequence B2, namely, the RSN 12 and the E-TFCI 13 (including the SF). Here, the E-TFCI 13 does not correspond to the spread ratio on a one-on-one basis. That is, there may be a case where multiple pieces of E-TFCI 13 use the same spread ratio (SF).

In step S20, the radio base station 100 executes the combining process of the signal sequence B1 before the despreading process which is received via the E-DPDCH and the signal sequence B1 stored in the HARQ buffer 121.

In step S30, the radio base station 100 executes the despreading process of the signal sequence B1 stared in the HARQ buffer 121 by using the spread ratio (SF) received at a target TTI (transmission time interval).

In step S40, the radio base station 100 executes the deinterleaving process of the signal sequence B1 received via the E-DPDCH.

In step S50, the radio base station 100 executes the derate matching of the signal sequence B1 received via the E-DPDCH.

Here, a method of rate matching by the source (the mobile terminal 200) is correlated one by one with each E-TFCI (E-TBS). Accordingly, if the incorrect E-TFCI is used, then it is impossible to achieve correct restoration (derate matching) of the received signal sequence B1.

In step S60, the radio base station 100 executes channel decoding of the signal sequence B1 after derate matching of a transmission rate, and thereby reproduces the signal.

In step S70, the radio base station 100 executes the judgment of an error in the received signal sequence B1 based on the CRC, and correction of the error.

### (4) Advantageous Effect

According to the radio base station 100 of the embodiment, the HARQ buffer 121 stores the signal sequence B1 which is outputted from the E-DPCCH despreading unit 109 and is yet to be derate-matched. For this reason, the combining process of the signal sequence B1 in the HARQ buffer 121 does not require the RSN 12 or the E-TFCI 13.

Moreover, in the embodiment, the signal sequence B1 which is outputted from the E-DPCCH despreading unit 109 but is yet to be inputted to the E-DPDCH despreading unit 113 is stored in the HARQ buffer 121. For this reason, the combining process is executed before the despreading process of the signal sequence B1 received via the E-DPDCH. Hence the spread ratio (SF) of the signal sequence B1 is not required either.

Specifically, according to the radio base station 100, it is possible to execute the combining process correctly upon first reception of the signal sequence B1 even if there is an error in the RSN 12 or the E-TFCI 13, and to further enhance transmission efficiency by the HARQ.

Here, in the conventional radio communication apparatus configured to execute the combining process of the signal sequence B1 by using the signal sequence B1 after derate matching, the incorrect signal sequence B1 is stored in the HARQ buffer 121 if a decoding result of the signal sequence B2 (the RSN 12 and the E-TFCI 13) received via the E-DPDCH is incorrect. As a consequence, the transmission efficiency by the HARQ is not improved.

### [Second Embodiment]

Next, a second embodiment of the present invention will be described. In the first embodiment, the HARQ buffer 121 stores the signal sequence outputted from the E-DPCCH despreading unit 109. Meanwhile, in the embodiment, the HARQ buffer 121 stores the signal sequence outputted from the deinterleaver 115. Different features from those in the above-mentioned first embodiment will be mainly described below.

### (1) Functional Block Configuration of Radio Communication Device

A location to provide the HARQ buffer 121 is changed in the radio base station 100 (the radio communication apparatus) according to the embodiment. As indicated with a dotted line in Fig. 2, the HARQ buffer 121 stores the signal sequence outputted from the deinterleaver 115. Specifically, the HARQ buffer 121 stores the signal sequence B1 which is outputted from the deinterleaver 115 and is yet to be inputted to the derate matching unit 117.

Meanwhile, the HARQ control unit 123 executes the combining process of the signal sequence B1 stored in the HARQ buffer 121, which is outputted from the deinterleaver 115 and is yet to be inputted to the derate matching unit 117, and the signal sequence B1 stored in the HARQ buffer 121.

### (2) Operations of Radio Communication Device

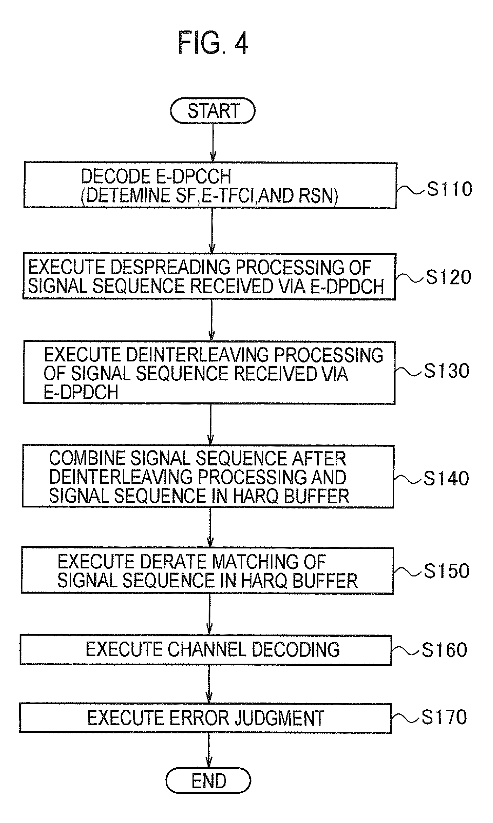

Fig. 4 shows a flow of a receiving operation by the radio base station 100 according to the embodiment. The processing in step S110 is similar to the contents of step S10 shown in Fig. 3.

In step S120, the radio base station 100 executes the despreading process of the signal sequence B1 received via the E-DPDCH.

In step S130, the radio base station 100 executes the deinterleaving process of the signal sequence B1 received via the E-DPDCH.

In step S140, the radio base station 100 executes the combining process of the signal sequence B1 after the deinterleaving process and the signal sequence B1 stored in the HARQ buffer 121.

In step S150, the radio base station 100 executes derate matching of the signal sequence B1 stored in the HARQ buffer 121, namely, derate matching of the transmission rate.

The processing in steps S160 and S170 is similar to the contents of the step S60 and Step S70 shown in Fig. 3.

### (3) Advantageous Effect

According to the radio base station 100 of the embodiment, the HARQ buffer 121 stores the signal sequence B1 outputted from the deinterleaver 115 which is yet to be derate-matched. For this reason, the combining process of the signal sequence in the HARQ buffer 121 does not require the RSN 12 or the E-TFCI 13.

Specifically, according to the radio base station 100, even if there is an error in the RSN 12 or the E-TFCI 13 upon first reception of the signal sequence B1, it is possible to execute the combining process correctly as long as the spread rate (SF) is correct. Hence it is possible to further enhance transmission efficiency by the HARQ.

### [Third Embodiment]

Next, a third embodiment of the present invention will be described. In the first embodiment, the HARQ buffer 121 stores the signal sequence outputted from the E-DPCCH despreading unit 109. Meanwhile, in the embodiment, the HARQ buffer 121 stores the signal sequence outputted from the derate matching unit 117. Different features from those in the above-mentioned first embodiment will be mainly described below.

### (1) Functional Block Configuration of Radio Communication Device

A location to provide the HARQ buffer 121 is changed in the radio base station 100 (the radio communication apparatus) according to the embodiment. As indicated with a dashed line in Fig. 2, the HARQ buffer 121 stores the signal sequence outputted from the derate matching unit 117. Specifically, the HARQ buffer 121 stores the signal sequence B1 outputted from the derate matching unit 117. That is, the location of the HARQ buffer 121 according to the embodiment is similar to that of the conventional radio communication apparatus such as the radio base station.

Moreover, the HARQ buffer 121 stores the signal sequence B2 (control information) together with the signal sequence B1. Specifically, the HARQ buffer 121 stores the RSN 12 and the E-TFCI 13 (see Fig. 6) together with the signal sequence B1.

Meanwhile, when the E-TFCI 13 (a first transmission format) of the signal series B1 at a specific TTI (a predetermined time interval) to execute the combining process of the signal sequence B1 is different from the E-TFCI (a second transmission format of the signal sequence B1 stored in the HARQ buffer 121, the HARQ control unit 123 executes rate matching of the signal sequence B1 stored in the HARQ buffer 121 by use of the second transmission format to make the signal sequence B1 stored in the HARQ buffer 121 have the same number of bits as the signal sequence B1 after encoding.

Moreover, the HARQ control unit 123 executes the combining process of the signal sequence B1 after the rate matching, which is used as the signal sequence after derate matching executed at a TTI earlier than the specific TTI, and the signal sequence after derate matching executed at the specific TTI. Further, the HARQ control unit 123 executes rate matching by use of the first transmission format.

That is, the HARQ buffer 121 stores the E-TFCI 13 of the signal sequence B1 received at the TTI earlier than, for example, immediately before the specific TTI to execute the combining process of the signal sequence B1. When the E-TFCI 13 at the specific TTI to execute the combining process of the signal sequence B1 is different from the E-TFCI 13 stored in the HARQ buffer 121, the HARQ control unit 123 executes rate matching and the combining process of the above-described signal sequence B1 by use of the E-TFCI 13 stored in the HARQ buffer.

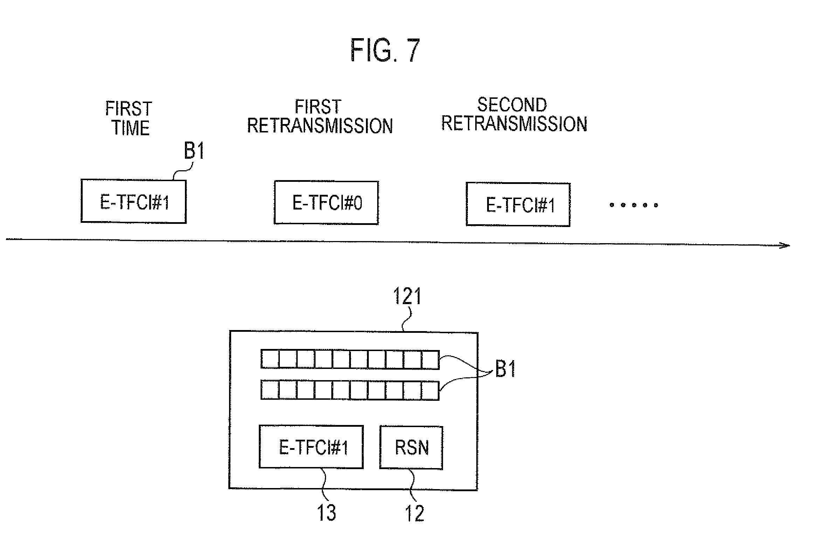

Fig. 7 is an operation explanatory diagram of the HARQ buffer 121 according to the embodiment. As shown in Fig. 7, the RSN 12 and the E-TFCI 13 (#1) are stored in the HARQ buffer 121 together with multiple signal sequences B1. For example, the RSN 12 and the E-TFCI 13 of the signal sequence B1 received at the first transmission are stored in the HARQ buffer 121.

When the E-TFCI 13 (#0) of the signal sequence B1, which is retransmitted because the signal sequence B1 received at the first transmission includes an error, is different from the E-TFCI 13 (#1) stored in the HARQ buffer 121, the HARQ control unit 123 executes rate matching and the combining process of the signal sequence B1 by using the E-TFCI 13 (#1) stored in the HARQ buffer.

### (2) Operations of Radio Communication Device

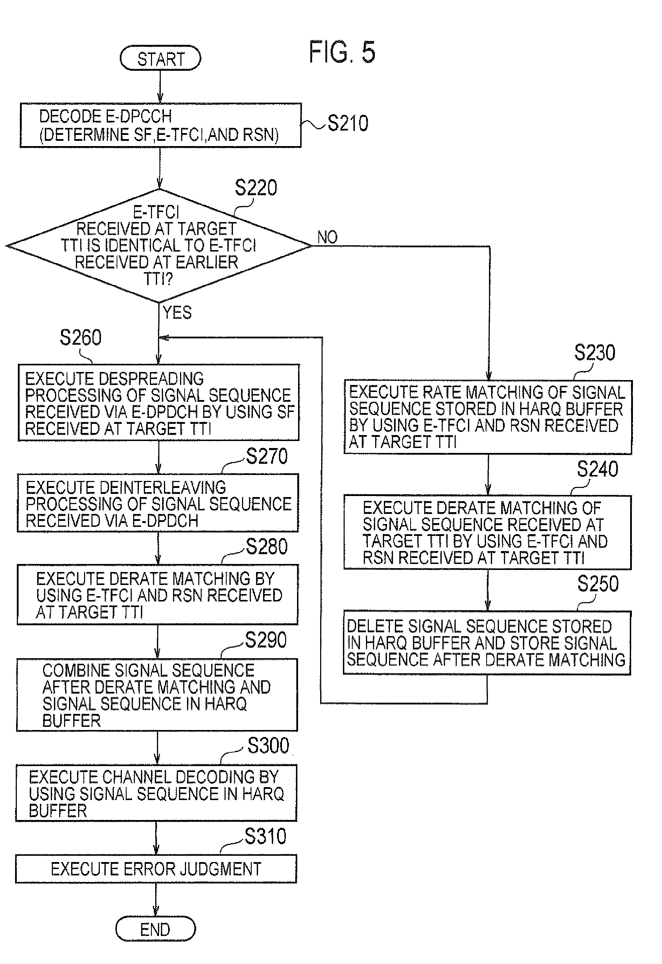

Fig. 5 shows a flow of a receiving operation by the radio base station 100 according to the embodiment. The processing in step S210 is similar to the contents of step S10 shown in Fig. 3.

In step S220, the radio base station 100 judges whether or not the E-TFCI received at the target TTI, i.e., the TTI to execute the combining process of the signal sequence B1, is identical to the E-TFCI received at the earlier TTI.

When the E-TFCI is not identical (NO in step S220), the radio base station 100 executes rate matching of the signal sequence B1 stored in the HARQ buffer in step S230 by using the E-TFCI and the RSN received at the earlier TTI, namely, those stored in the HARQ buffer 121.

In step S240, the radio base station 100 executes derate matching, namely, derate matching of the transmission rate of the signal sequence B1 received at the target TTI by using the E-TFCI and the RSN received at the target TTI (the TTI to execute the combining process of the signal sequence B1).

In step S250, the radio base station 100 deletes the signal sequence B1 stored in the HARQ buffer 121, and stores the signal sequence B1 after derate matching in step S240 in the HARQ buffer 121.

When the E-TFCI is identical (YES in step S220), or after the processing in step S250, the radio base station 100 executes the despreading process in step S260 of the signal sequence B1 received via the E-DPDCH by using the spread ratio (SF) received at the target TTI (transmission time interval).

In step S270, the radio base station 100 executes the deinterleaving process of the signal sequence B1 received via the E-DPDCH.

In step S280, the radio base station 100 executes the despreading process of the signal sequence B1 received via the E-DPDCH by using the E-TFCI and the RSN received at the target TTI.

In step S290, the radio base station 100 executes the combining process of the signal sequence B1 after derate matching and the signal sequence B1 stored in the HARQ buffer 121.

In step S300, the radio base station 100 executes channel decoding by using the signal sequence B1 in the HARQ buffer 121 and reproduces the signal.

In step S310, the radio base station 100 executes the judgment of an error in the received signal sequence B1 based on the CRC, and correction of the error.

### (3) Advantageous effect

According to the radio base station 100 of the embodiment, when the E-TFCI 13 of the signal sequence at the specific TTI to execute the combining process of the signal sequence B1 is different from the E-TFCI 13 of the signal sequence B1 at the TTI earlier than the target TTI, the combining process is executed by using the E-TFCI 13 stored in the HARQ buffer 121. For this reason, by executing rate matching of the signal sequence B1 stored in the HARQ buffer 121 while using the E-TFCI 13 received earlier than the specific TTI to execute the combining process of the signal sequence B1, it is possible to perform the combining process (soft combining) of the retransmitted signal sequence B1 and the signal sequence B1 stored in the HARQ buffer 121.

That is, according to the radio base station 100, it is possible to execute the combining process correctly even if the control information such as the E-TFCI or the RSN is incorrect, and to further enhance transmission efficiency by the HARQ.

### [Other Embodiments]

As described above, the details of the present invention have been disclosed by using the embodiments of the present invention. However, it should not be understood that the description and drawings which constitute part of this disclosure limit the present invention. From this disclosure, various alternative embodiments, examples, and operation techniques will be easily found by those skilled in the art.

For example, in the first embodiment to the third embodiment described above, the mobile telecommunication system 1 in accordance with the EUL has been explained as the example. However, the range of application of the present invention is not limited to the EUL. For example, the present invention may be applied to a downlink direction such as a HSDPA. That is, the mobile terminal 200 may also include the same function as that of the above-described radio base station 100.

The above-described third embodiment has explained the case where the E-TFCI 13 of the signal sequence B1 received at the TTI earlier than, namely, immediately before the specific TTI to execute the combining process of the signal sequence B1, which is the E-TFCI 13 stored in the HARQ buffer 121, is different from the E-TFCI 13 at the specific TTI to execute the combining process of the signal sequence B1. However, the TTI used as a target of comparison does not always have to be the TTI immediately before the TTI to execute the combining process of the signal sequence B1. For example, it is also possible to use the TTI which is earlier by a predetermined number of intervals.

As described above, it is needless to say that the present invention encompasses various other embodiments which are not expressly stated herein. Therefore, the technical scope of the present invention should only be determined by the matter to define the invention according to the claims which are deemed to be appropriate from the above description. It is to be noted that the entire contents of Japanese Patent Application No. 2008-323794 (filed on December 19, 2008) are incorporated in this specification by reference.

### INDUSTRIAL APPLICABILITY

As described above, according to the radio communication apparatus and the radio communication method of the present invention, it is possible to further enhance transmission efficiency by the HARQ when a signal sequence is received via a physical data channel.

## Claims

1. A radio communication apparatus configured to execute a hybrid automatic repeat request including an automatic repeat request to request a source of a signal sequence transmitted via a physical data channel to retransmit the signal sequence and combining process of the signal sequence received a plurality of times as a consequence of the retransmission, the radio communication apparatus comprising:
a despreading unit configured to execute despreading process of the signal sequence received via the physical data channel;
a HARQ buffer configured to store the signal sequence outputted from the despreading unit; and
a HARQ control unit configured to execute the combining process by using the signal sequence stored in the HARQ buffer.

2. The radio communication apparatus according to claim 1, wherein the despreading unit includes:
a control channel despreading unit configured to execute despreading process of a signal sequence received via a physical control channel; and
a data channel despreading unit connected to an output side of the control channel despreading unit and configured to execute the despreading process of the signal sequence received via the physical data channel by using part of the signal sequence received via the physical control channel after the despreading process of the signal sequence received via the physical control channel, and
the HARQ buffer stores the signal sequence which is yet to be inputted to the data channel despreading unit.

3. A radio communication apparatus configured to execute a hybrid automatic repeat request including an automatic repeat request to request a source of a signal sequence transmitted via a physical data channel to retransmit the signal sequence and combining process of the signal sequence received a plurality of times as a consequence of the retransmission, the radio communication apparatus comprising:
a deinterleaving process unit configured to execute deinterleaving process of the signal sequence received via the physical data channel;
a HARQ buffer configured to store the signal sequence outputted from the deinterleaving process unit; and
a HARQ control unit configured to execute the combining process by using the signal sequence stored in the HARQ buffer.

4. The radio communication apparatus according to claim 3, further comprising:
a derate matching unit connected to an output side of the deinterleaving process unit and configured to execute derate matching of the deinterleaved signal sequence after the deinterleaving process, the derate matching making the signal sequence have the same number of bits as the signal sequence before encoding by performing at least any of repetition and puncturing on the signal sequence, wherein
the HARQ buffer stores the signal sequence which is outputted from the deinterleaving process unit and is yet to be inputted to the derate matching unit.

5. The radio communication apparatus according to claim 3, further comprising:
a despreading unit configured to execute despreading process of the signal sequence received via the physical data channel, wherein
the despreading unit executes the despreading process before the deinterleaving process, and
the HARQ control unit executes the combining process of the signal sequence which is stored in the HARQ buffer, and which is outputted from the deinterleaving process unit and is yet to be inputted to the derate matching unit.

6. A radio communication apparatus configured to execute a hybrid automatic repeat request including an automatic repeat request to request a source of a signal sequence transmitted via a physical data channel to retransmit the signal sequence and combining process of the signal sequence received a plurality of times as a consequence of the retransmission, the radio communication apparatus comprising:
a derate matching unit configured to execute derate matching on the signal sequence after deinterleaving process, the derate matching making the signal sequence have the same number of bits as the signal sequence before encoding by performing least any of repetition and puncturing on the signal sequence;
a HARQ buffer configured to store the signal sequence outputted from the derate matching unit, and control information including a transmission format of the physical data channel; and
a HARQ control unit configured to execute the combining process by using the signal sequence stored in the HARQ buffer, wherein
when a first transmission format being a transmission format of the signal sequence at a predetermined time interval is different from a second transmission format being a transmission format of the signal sequence at a time interval earlier than the predetermined time interval, the HARQ control unit executes rate matching of the signal sequence stored in the HARQ buffer by using the second transmission format, the rate matching making the signal sequence stored in the HARQ buffer have the same number of bits as the signal sequence after encoding,
the HARQ control unit executes the combining process of the signal sequence after the derate matching executed at the predetermined time interval, and the signal sequence after the rate matching, which is used as the signal sequence after the derate matching executed at the time interval earlier than the predetermined time interval, and
the HARQ control unit executes the rate matching by using the first transmission format.

7. The radio communication apparatus according to claim 6, further comprising:
a channel decoding unit connected to the derate matching unit and configured to decode the derate-matched signal sequence after the deinterleaving process, wherein
the HARQ buffer stores the signal sequence which is outputted from the derate matching unit and is yet to be inputted to the channel decoding unit.

8. A radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of:
executing despreading process of the signal sequence received via the physical data channel;
storing in a HARQ buffer the signal sequence outputted from the despreading unit; and
executing the combining process by using the signal sequence stored in the HARQ buffer.

9. A radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of:
executing deinterleaving process of the signal sequence received via the physical data channel;
storing in a HARQ buffer the signal sequence outputted by the deinterleaving process; and
executing the combining process by using the signal sequence stored in the HARQ buffer.

10. A radio communication method for executing a hybrid automatic repeat request including an automatic repeat request to request a source of a signal sequence transmitted via a physical data channel to retransmit the signal sequence and combining process of the signal sequence received a plurality of times as a consequence of the retransmission, the radio communication method comprising the steps of:
executing derate matching of the signal sequence after deinterleaving process, the derate matching making the signal sequence have the same number of bits as the signal sequence before encoding by performing at least any of repetition and puncturing on the signal sequence;
storing in a HARQ buffer the signal sequence outputted from the derate matching and control information including a transmission format of the physical data channel; and
executing the combining process by using the signal sequence stored in the HARQ buffer, wherein
in the step of executing the combining process, when a first transmission format being a transmission format of the signal sequence at a predetermined time interval is different from a second transmission format being a transmission format of the signal sequence at a time interval earlier than the predetermined time interval, rate matching of the signal sequence stored in the HARQ buffer is executed to make the signal sequence have the same number of bits as the signal sequence after encoding by using the second transmission format,
the combining process is executed to combine the signal sequence after the derate matching executed at the predetermined time interval and the signal sequence after the rate matching, which is used as the signal sequence after the derate matching executed at the time interval earlier than the predetermined time interval, and
the rate matching is executed by using the first transmission format.
